# EUROPEAN PATENT APPLICATION

(11) **EP 4 746 473 A1**
(43) Date of publication of application: **20.05.2026**
(21) Application number: 23945809.4
(22) Date of filing: 14.07.2023
(51) Int. Cl.: H04W 12/041, H04W 36/24

(54) **TERMINAL, BASE STATION, WIRELESS COMMUNICATION SYSTEM, AND WIRELESS COMMUNICATION METHOD**

(71) Applicant: NTT DOCOMO, INC., Tokyo 100-6150 (JP)
(72) Inventor: MIN Tianyang, Tokyo 100-6150 (JP)
(74) Representative: Hoffmann Eitle
(86) International application number: PCT/JP2023/026135
(87) International publication number: WO 2025/017804

(57) **Abstract**

A terminal includes: a communication unit that communicates with a base station forming candidate cells to which the terminal may move; and a control unit that generates, based on a key generation parameter for each of the candidate cells, security keys for the candidate cells, wherein the communication unit transmits key-related information related to the key generation parameter.

## Description

### TECHNICAL FIELD

The present disclosure relates to a terminal, a base station, a radio communication system, and a radio communication method that support Subsequent CPC.

### BACKGROUND ART

The 3rd Generation Partnership Project (3GPP) has prepared a specification for the 5th generation mobile communication system (also called 5G, New Radio (NR), or Next Generation (NG)) and is also preparing a next generation specification called Beyond 5G, 5G Evolution, or 6G.

In 3GPP Release 18, a method is being studied which reduces an increase in signaling overhead caused by repeated reconfiguration and discarding of configuration information between a terminal and a network when the terminal moves between specific candidate cells (Non-patent literature 1). The configuration information is information used for communication between a terminal and a base station forming multiple candidate cells. For example, the configuration information is UE context, conditional config, or the like.

### CITATION LIST

### NON-PATENT LITERATURE

Non-Patent Literature 1: "Revised WID on Further NR mobility enhancements", RP-221799, 3GPP TSG RAN Meeting #96, Budapest, Hungary, June 6 to 9, 2022

### SUMMARY OF INVENTION

A method (Subsequent CPC) has been proposed where a terminal continues maintaining configuration information even when moving of the terminal to a base station forming a candidate cell is completed, thereby reducing reconfiguration and discarding of the configuration information. In the method, from the viewpoint of security, it is necessary to update a key generation parameter (for example, sk counter value or NCC (Next Hop Chaining Counter) parameter) for the terminal to generate a security key (for example, K_{SN}) for connecting to the candidate cell.

In the background described above, the inventors have found, as a result of intensive investigation, a need to have a mechanism where a terminal and a base station have common understanding of a key generation parameter used by the terminal in generating a security key.

Thus, the disclosure is made in view of the above issue, and an object thereof is to provide a terminal, a base station, a radio communication system, and a radio communication method capable of having common understanding of a key generation parameter between a terminal and a base station.

An aspect of the disclosure is a terminal including: a communication unit that communicates with a base station forming candidate cells to which the terminal may move; and a control unit that generates, based on a key generation parameter for each of the candidate cells, security keys for the candidate cells, wherein the communication unit transmits key-related information related to the key generation parameter.

An aspect of the disclosure is a base station including: a communication unit that communicates with a terminal; and a control unit that assumes that the terminal generates security keys for candidate cells, based on a key generation parameter for each of the candidate cells to which the terminal may move, wherein the communication unit receives key-related information related to the key generation parameter.

An aspect of the disclosure is a radio communication system including: a terminal; and a base station, wherein the terminal includes a communication unit that communicates with a base station forming candidate cells to which the terminal moves, and a control unit that generates security keys for the candidate cells, based on a key generation parameter for each of the candidate cells, wherein the communication unit transmits key-related information related to the key generation parameter.

An aspect of the disclosure is a radio communication method including: a step A of communicating with a base station forming a candidate cells to which a terminal may move; a step B of generating security keys for the candidate cells, based on a key generation parameter for each of the candidate cells; and a step C of transmitting key-related information related to the key generation parameter.

### BRIEF DESCRIPTION OF DRAWINGS

[FIG. 1] FIG. 1 is an overall schematic configuration diagram of a radio communication system 10.
[FIG. 2] FIG. 2 is a diagram illustrating frequency ranges used in the radio communication system 10.
[FIG. 3] FIG. 3 is a diagram illustrating a configuration example of a radio frame, subframes, and slots used in the radio communication system 10.
[FIG. 4] FIG. 4 is a functional block diagram of a UE 200.
[FIG. 5] FIG. 5 is a functional block diagram of a gNB 100.
[FIG. 6] FIG. 6 is a diagram illustrating security key generation.
[FIG. 7] FIG. 7 is a diagram illustrating operation example 1.
[FIG. 8] FIG. 8 is a diagram illustrating operation example 2.
[FIG. 9] FIG. 9 is a diagram illustrating operation example 3.
[FIG. 10] FIG. 10 is a diagram illustrating operation example 4.
[FIG. 11] FIG. 11 is a diagram illustrating operation example 5.
[FIG. 12] FIG. 12 is a diagram illustrating operation example 6.
[FIG. 13] FIG. 13 is a diagram illustrating operation example 7.
[FIG. 14] FIG. 14 is a diagram illustrating operation example 8.
[FIG. 15] FIG. 15 is a diagram illustrating operation example 9.
[FIG. 16] FIG. 16 is a diagram illustrating operation example 10.
[FIG. 17] FIG. 17 is a diagram illustrating a hardware configuration example of the gNB 100 and the UE 200.
[FIG. 18] FIG. 18 is a diagram illustrating a configuration example of a vehicle 2001.

### DESCRIPTION OF EMBODIMENT

Embodiments will be described below with reference to the drawings. Note that the same or similar reference numerals have been attached to the same functions and configurations, and descriptions thereof will be omitted as appropriate.

### [Embodiments]

### (1) Overall schematic configuration of radio communication system

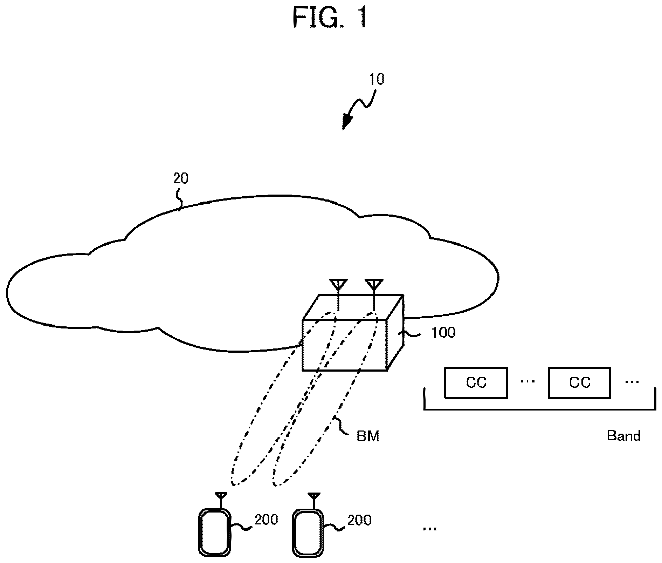

FIG. 1 is an overall schematic configuration diagram of a radio communication system 10 according to an embodiment. The radio communication system 10 is a 5G New Radio (NR) compliant radio communication system, and includes a Next Generation-Radio Access Network 20 (hereinafter, NG-RAN 20 and a terminal 200 (hereinafter, UE (User Equipment) 200).

Note that the radio communication system 10 may be compliant with a system called Beyond 5G, 5G Evolution, or 6G.

The NG-RAN 20 includes a base station 100 (hereinafter, gNB 100). Note that the specific configuration of the radio communication system 10, including the number of gNBs 100 and UEs 200, is not limited to the example illustrated in FIG. 1.

The NG-RAN 20 actually includes multiple NG-RAN nodes, specifically gNBs (or ng-eNBs), and is connected to a 5G-compliant core network (5GC, not illustrated). Note that the NG-RAN 20 and 5GC may be expressed simply as "network".

The gNB 100 is a 5G-compliant radio base station, and performs radio communication according to 5G with the UE 200. The gNB 100 and the UE 200 can support Massive MIMO (Multiple-Input Multiple-Output) generating a beam BM with higher directivity by controlling radio signals transmitted from multiple antenna elements, a carrier aggregation (CA) bundling and using multiple component carriers (CCs), and dual connectivity (DC) performing simultaneous communication with two or more transport blocks between the UE and each of the two NG-RAN Nodes.

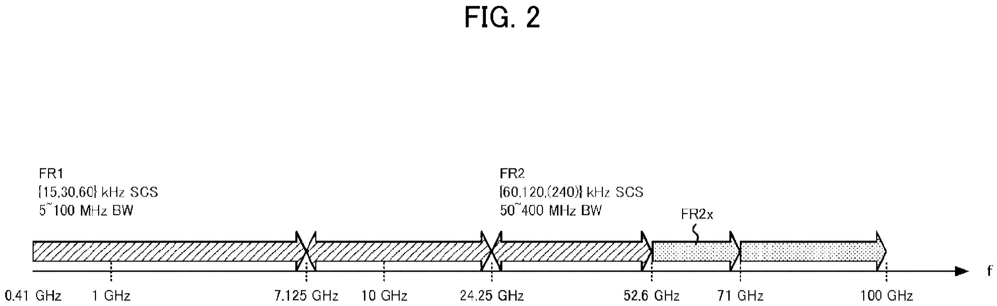

The radio communication system 10 supports multiple frequency ranges (FRs). FIG. 2 illustrates frequency ranges used in the radio communication system 10.

As illustrated in FIG. 2, the radio communication system 10 may support FR1, FR2-1, and FR2-2. Frequency bands of the FRs are as follows.

· FR1: 410 MHz to 7.125 GHz
· FR2-1: 24.25 GHz to 52.6 GHz
· FR2-2: 52.6 GHz to 71 GHz

In FR1, a Sub-Carrier Spacing (SCS) of 15, 30, or 60 kHz is used, and a bandwidth (BW) of 5 to 100 MHz may be used. FR2-2 is a higher frequency than FR1, an SCS of 60 or 120 kHz (240 kHz may be included) is used, and a bandwidth (BW) of 50 to 400 MHz may be used. FR2-2 is a higher frequency than FR2-1, an SCS of 120, 480, or 960 kHz is used, and a bandwidth (BW) of 400 to 2,000 MHz may be used.

Note that the SCS may be interpreted as numerology. Numerology is defined in 3GPP TS38.300 and corresponds to one Sub-Carrier Spacing in a frequency domain.

The radio communication system 10 also supports a frequency band higher than that of FR 2-2. Specifically, the radio communication system 10 supports a frequency band above 52.6 GHz, and up to 71 GHz or 114.25 GHz. Such a high frequency band may be called "FR2x" for convenience.

When a band above 52.6 GHz is used, Cyclic Prefix-Orthologous Frequency Division Multiplexing (CP-OFDM) or Discrete Fourier Transform-Spread (DFT-S-OFDM) having a larger SubCarrier Spacing (SCS) may be applied in response to an issue where the influence of phase noise increases in the high frequency band.

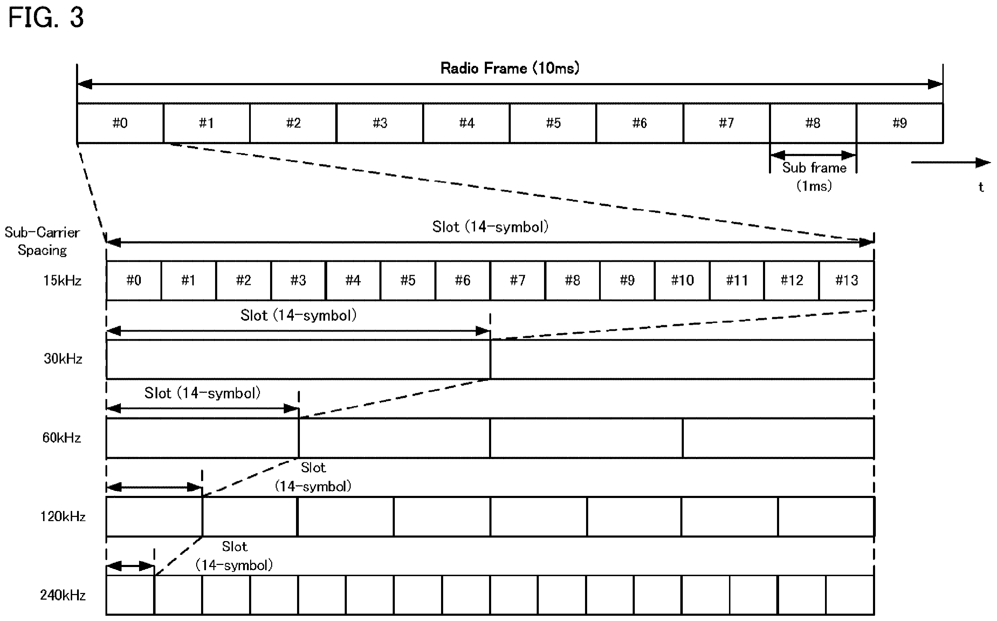

Fig. 3 illustrates a configuration example of a radio frame, subframes, and slots used in the radio communication system 10.

As illustrated in FIG. 3, one slot consists of 14 symbols, and the symbol length (and the slot length) gets shorter as the SCS gets larger (wider). The SCS is not limited to the spacing (frequencies) in FIG. 3. For example, 480 kHz, 960 kHz, or the like may be used.

The number of symbols constituting one slot does not necessarily have to be 14 symbols (for example, it may be 28 or 56 symbols). Furthermore, the number of slots per subframe may differ depending on the SCS.

Note that a time direction (t) in FIG. 3 may be called a time domain, a symbol length, a symbol time, or the like. A frequency direction may be called a frequency domain, a resource block (RB), a subcarrier, a bandwidth part (BWP: Bandwidth Part), or the like.

A DMRS is a type of reference signal and is prepared for various channels. Here, unless otherwise noted, a DMRS for a downlink data channel, specifically for a PDSCH (Physical Downlink Shared Channel), may be understood. However, a DMRS for an uplink data channel, specifically for a PUSCH (Physical Uplink Shared Channel), may be interpreted in the same manner as a DMRS for a PDSCH.

The DMRS can be used for channel estimation in the UE 200 as a device, for example, part of coherent demodulation. The DMRS may be present only in a resource block (RB) used for a PDSCH transmission.

The DMRS may have multiple mapping types. Specifically, the DMRS has mapping type A and mapping type B. In mapping type A, the first DMRS is arranged on the second or third symbol of a slot. In mapping type A, the DMRS may be mapped based on slot boundaries regardless of where in the slot the actual data transmission begins. The reason why the first DMRS is arranged on the second or third symbol of the slot may be interpreted as in order to arrange the first DMRS after a control resource set (CORESET).

In mapping type B, the first DMRS may be arranged on the first symbol in data allocation. That is, the position of the DMRS may be provided relative to where data is arranged, not to slot boundaries.

The DMRS may have multiple types. Specifically, the DMRS may have Type 1 and Type 2. Type 1 and Type 2 differ in mapping in the frequency domain and the maximum number of orthogonal reference signals. Type 1 can output up to four orthogonal signals with a single-symbol DMRS, while Type 2 can output up to eight orthogonal signals with a double-symbol DMRS.

### (2) Functional block configuration of radio communication system

Next, a functional block configuration of the radio communication system 10 will be described.

First, a function block configuration of the UE 200 will be described.

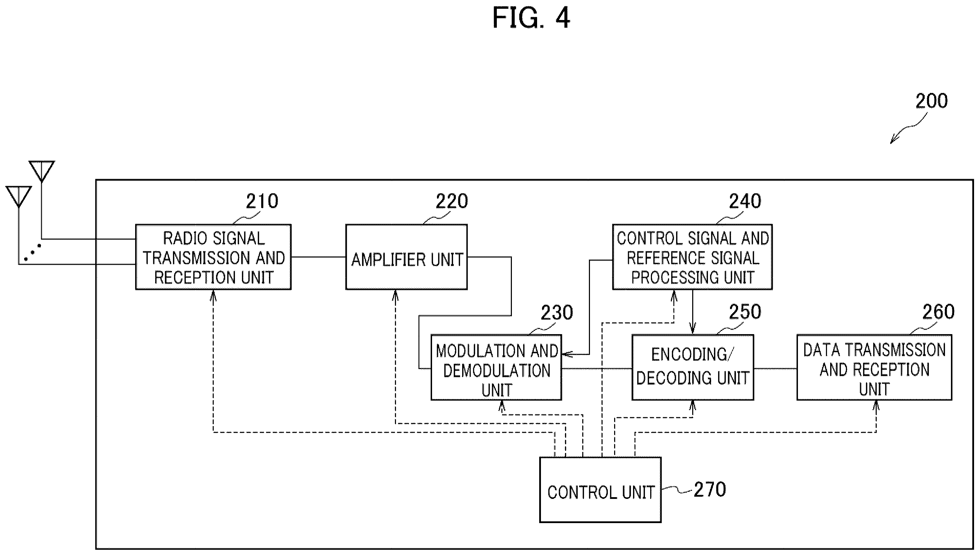

FIG. 4 is a functional block configuration diagram of the UE 200. As illustrated in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives radio signals according to NR. The radio signal transmission and reception unit 210 can support massive MIMO, carrier aggregation (CA) bundling and using multiple CCs, and DC performing simultaneous communication between a UE and each of two NG-RAN Nodes.

In the embodiment, the radio signal transmission and reception unit 210 constitutes a communication unit that communicates with a base station (gNB 100) forming candidate cells to which a terminal (UE 200) moves. The candidate cell may be an SN (Secondary Node) in DC, or may be a Target cell in Handover. The cell may be read as gNB. Cell movement may include movement due to conditional reconfiguration, or movement due to LTM (Lower layer Triggered Mobility). The conditional reconfiguration may include CHO (Conditional Handover), CPC (Conditional PScell Change), or CPA (Conditional PScell Addition).

The amplifier unit 220 includes a PA (Power Amplifier) / an LNA (Low Noise Amplifier), and the like. The amplifier unit 220 amplifies a signal output from the modulation and demodulation unit 230 to a predetermined power level. The amplifier unit 220 also amplifies an RF signal output from the radio signal transmission and reception unit 210.

The modulation and demodulation unit 230 performs data modulation / demodulation, transmission power configuration, resource block allocation, and the like for each predetermined communication destination (gNB 100 or another gNB). In the modulation and demodulation unit 230, Cyclic Prefix-Orthogonal Frequency Division Multiplexing (CP-OFDM) or Discrete Fourier Transform-Spread (DFT-S-OFDM) may be applied. DFT-S-OFDM may also be used for a downlink (DL) as well as an uplink (UL).

The control signal and reference signal processing unit 240 performs processing regarding various control signals transmitted and received by the UE 200, and processing regarding various reference signals transmitted and received by the UE 200.

Specifically, the control signal and reference signal processing unit 240 receives various control signals transmitted from the gNB 100 via a predetermined control channel, for example, a control signal of a radio resource control (RRC) layer. The control signal and reference signal processing unit 240 also transmits various control signals to the gNB 100 via a predetermined control channel.

The control signal and reference signal processing unit 240 performs processing using a reference signal (RS), such as a Demodulation Reference Signal (DMRS) and a Phase Tracking Reference Signal (PTRS).

The DMRS is a known reference signal (pilot signal) specific to a terminal, between a base station and a terminal for estimating a fading channel used for data demodulation. The PTRS is a reference signal specific to a terminal for the purpose of estimating phase noise, which becomes an issue in a high frequency band.

Note that the reference signal may include a Channel State Information-Reference Signal (CSI-RS), a Sounding Reference Signal (SRS), and a Positioning Reference Signal (PRS) for positional information, in addition to the DMRS and the PTRS.

The channel includes a control channel and a data channel. The control channel includes a PDCCH (Physical Downlink Control Channel), a PUCCH (Physical Uplink Control Channel), an RACH (Random Access Channel), Downlink Control Information (DCI) including a Random Access Radio Network Temporary Identifier (RA-RNTI), a Physical Broadcast Channel (PBCH), and the like.

The data channel includes a PDSCH (Physical Downlink Shared Channel), a PUSCH (Physical Uplink Shared Channel), and the like. Data here means data that is transmitted via a data channel. The data channel may be substituted with a shared channel.

Here, the control signal and reference signal processing unit 240 may receive Downlink Control Information (DCI). The DCI includes existing fields to store DCI formats, a carrier indicator (CI), a BWP indicator, an FDRA (Frequency Domain Resource Allocation), a TDRA (Time Domain Resource Allocation), an MCS (Modulation and Coding Scheme), an HPN (HARQ Process Number), an NDI (New Data Indicator), an RV (Redundancy Version), and the like.

A value stored in a DCI Format field is an information element to specify a format of the DCI. A value stored in a CI field is an information element to specify a CC to which the DCI is applied. A value stored in a BWP indicator field is an information element to specify a BWP to which the DCI is applied. The BWP, which can be specified by the BWP indicator, is configured using an information element (BandwidtPart-Config) included in an RRC message. A value stored in an FDRA field is an information element to specify a frequency domain resource to which the DCI is applied. The frequency domain resource is identified by a value stored in the FDRA field and an information element (RA Type) included in the RRC message. A value stored in a TDRA field is an information element to specify a time domain resource to which the DCI is applied. The time domain resource is identified by a value stored in the TDRA field and an information element (pdsch-TimeDomainAllocationList, pusch-TimeDomainAllocationList) included in the RRC message. The time domain resource may be identified by a value stored in the TDRA field and a default table. A value stored in an MCS field is an information element to specify an MCS to which the DCI is applied. The MCS is identified by a value stored in the MCS, and an MCS table. The MCS table may be specified by the RRC message, or identified by RNTI scrambling. A value stored in an HPN field is an information element to specify an HARQ Process to which the DCI is applied. A value stored in the NDI is an information element to identify whether data, to which the DCI is applied, is the first transmission data. A value stored in an RV field is an information element to specify the redundancy of data to which the DCI is applied.

The encoding/decoding unit 250 performs data division/concatenation, channel coding/decoding, and the like for each predetermined communication destination (gNB 100 or another gNB).

Specifically, the encoding/decoding unit 250 divides the data output from the data transmission and reception unit 260 into predetermined sizes, and performs channel coding on the divided data. The encoding/decoding unit 250 also decodes the data output from the modulation and demodulation unit 230 and connects the decoded data.

The data transmission and reception unit 260 performs transmission and reception for Protocol Data Units (PDUs) and Service Data Units (SDUs). Specifically, the data transmission and reception unit 260 performs assembly, disassembly, and the like for PDUs/SDUs in multiple layers (medium access control (MAC) layer, radio link control (RLC) layer, packet data convergence protocol (PDCP) layer, and the like). The data transmission and reception unit 260 also performs error correction and retransmission control of data, based on an HARQ (Hybrid Automatic Repeat Request).

The control unit 270 controls each of the functional blocks configuring the UE 200. In the embodiment, the control unit 270 constitutes a control unit that generates a security key (K_{SN}) for a candidate cell, based on a key generation parameter (for example, sk counter value or NCC (Next Hop Chaining Counter) parameter) for each candidate cell. Specifically, the control unit 270 generates a security key (K_{SN}), based on information (K_{gNB}) related to the gNB 100, and the key generation parameter. The information (K_{gNB}) related to the gNB 100 may be configured by an RRC. The key generation parameter may be updated in accordance with cell movement.

In the embodiment, a method (Subsequent CPC) may be assumed where the control unit 270 continues maintaining configuration information (CPC config) related to a candidate cell even when movement to the candidate cell is completed in CHO, CPC, CPA, LTM, or the like. In Subsequent CPC, reconfiguration and discarding of configuration information related to a candidate cell can be controlled.

First, the control unit 270 may instruct the radio signal transmission and reception unit 210 to transmit key-related information related to a key generation parameter. In other words, the radio signal transmission and reception unit 210 transmits key-related information related to key generation parameters. Key-related information may be transmitted to an MN. Key-related information may be transmitted to a Target SN (hereinafter, T-SN) via an MN. Key-related information may be included in an RRC message (for example, RRCReconfigurationComplete) to an MN. Key-related information may be transmitted to a Target gNB (hereinafter, T-gNB). Key-related information may be included in an RRC message (for example, RRCReconfigurationComplete) to a T-gNB.

Here, key-related information may include information described below.

In option 1-1, key-related information may include a key generation parameter which has been used to generate a security key. That is, the key-related information may include an sk counter value which has been used to generate K_{SN} for a candidate cell, and an NCC parameter which has been used to generate the K_{SN} for the candidate cell. The sk counter value may be expressed simply as sk counter, and the NCC parameter may be expressed simply as NCC.

In option 1-2, key-related information may include information indicating exhaustion of key generation parameters allocated to a candidate cell. Here, the number of key generation parameters (that is, security keys generated based on key generation parameters) may be different for each candidate cell, or the same for each candidate cell.

Note that option 1-1 and option 1-2 may be combined.

Second, the control unit 270 may instruct the radio signal transmission and reception unit 210 to transmit prediction information related to the number of security keys to be allocated to a candidate cell. In other words, the radio signal transmission and reception unit 210 transmits prediction information related to the number of security keys to be allocated to a candidate cell. The prediction information may be included in an RRC message (for example, UE Assistance Information).

Here, the prediction information may include information described below.

In option 2-1, prediction information may include information indicating a predicted trajectory of a cell to which the UE 200 moves (Predicted UE trajectory). The Predicted UE trajectory may include future UE 200 physical location information (for example, latitude, longitude, altitude, and the like), and may include a Cell ID of a PCell or PSCell where the UE 200 will stay in the future, and time that the UE 200 will stay in the PCell or PSCell. The Predicted UE trajectory may be predicted by the UE 200 using an AIML model (AI (Artificial Intelligence) or ML (Machine Learning)).

In option 2-2, prediction information may include information indicating the number of security keys to be allocated to a candidate cell. Information indicating the number of security keys may be specified based on the Predicted UE trajectory. For example, the number of security keys assigned to a candidate cell where a movement frequency of the UE 200 is predicted to be higher than a threshold may be greater than the number of security keys assigned to a candidate cell where a movement frequency of the UE 200 is predicted to be lower than the threshold.

Note that options 1-1 and 1-2 may be combined.

Second, a functional block configuration of the gNB 100 will be described.

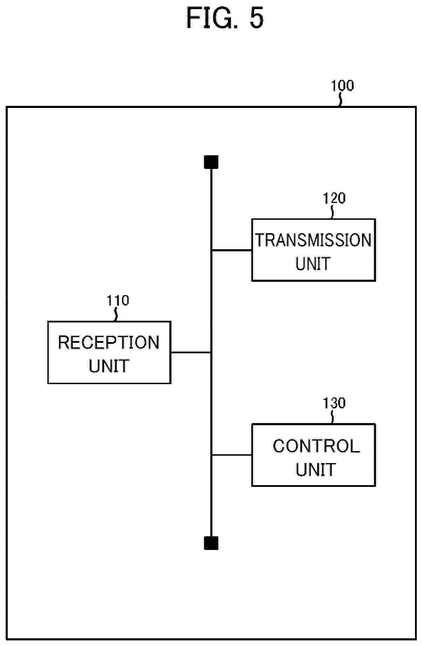

FIG. 5 is a functional block configuration diagram of the gNB 100. As illustrated in FIG. 5, the gNB 100 includes a reception unit 110, a transmission unit 120, and a control unit 130.

The reception unit 110 receives various signals from the UE 200. The reception unit 110 may receive a UL signal via a PUCCH or PUSCH.

The transmission unit 120 transmits various signals to the UE 200. The transmission unit 120 may transmit a DL signal via a PDCCH or PDSCH.

In the embodiment, the reception unit 110 and the transmission unit 120 constitute a communication unit for communicating with a terminal (UE 200).

The control unit 130 controls the gNB 100. In the embodiment, the control unit 130 constitutes a control unit that assumes that a terminal generates a security key for a candidate cell, based on a key generation parameter for each candidate cell to which the terminal moves.

First, the control unit 130 may assume reception of key-related information related to a key generation parameter. In other words, the reception unit 110 may receive key-related information related to a key generation parameter.

Second, the control unit 130 may specify the number of security keys to be allocated to a candidate cell, based on a predicted trajectory of a cell to which the UE 200 moves. The predicted trajectory of a cell to which the UE 200 moves may be predicted by the gNB 100 using an AIML model (AI or ML), based on a Measurement report received from the UE 200. The predicted trajectory of a cell to which the UE 200 moves may be predicted based on mobility history information (visitedCellInfoList IE) or UE history information IE of the UE 200. The UE history information IE may include a Cell ID of a cell where the UE 200 stayed in the past, and time that the UE 200 stayed in the cell. The mobility history information or UE history information IE may be received from the UE 200. The predicted trajectory of a cell to which the UE 200 moves may be received from the UE 200. For example, the number of security keys assigned to a candidate cell where a movement frequency of the UE 200 is predicted to be higher than a threshold may be greater than the number of security keys assigned to a candidate cell where a movement frequency of the UE 200 is predicted to be lower than the threshold.

### (3) Generation of security key

Generation of a security key will be described below. Here, assuming a DC, the case where SN1, SN2, and SN3 are present will be exemplified.

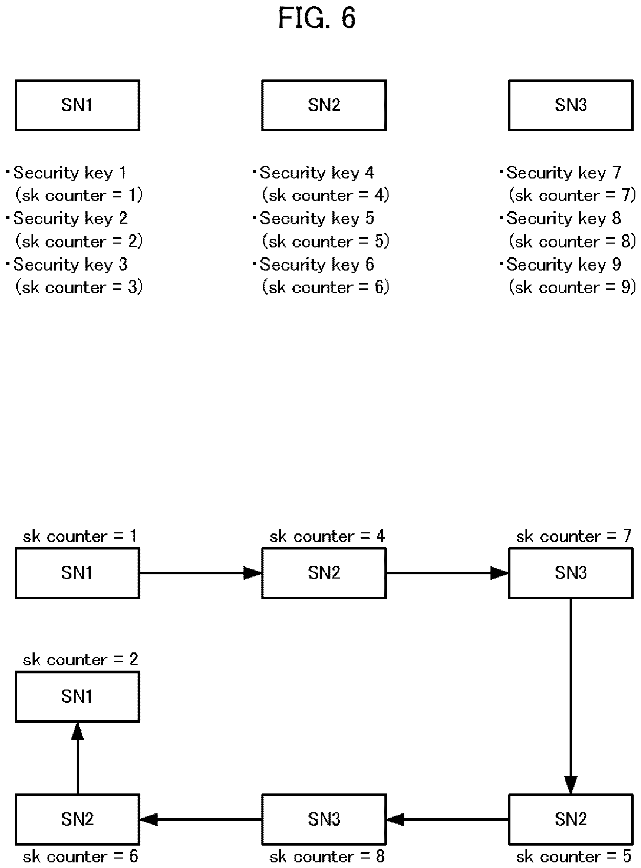

As illustrated in the upper part of FIG. 6, a security key 1, a security key 2, and a security key 3 are allocated to an SN1 as security keys. The security key 1 is generated based on an sk counter 1, the security key 2 is generated based on an sk counter 2, and the security key 3 is generated based on an sk counter 3. A security key 4, a security key 5, and a security key 6 are allocated to an SN2 as security keys. The security key 4 is generated based on an sk counter 4, the security key 5 is generated based on an sk counter 5, and the security key 6 is generated based on an sk counter 6. A security key 7, a security key 8, and a security key 9 are allocated to an SN3 as security keys. The security key 7 is generated based on an sk counter 7, the security key 8 is generated based on an sk counter 8, and the security key 9 is generated based on an sk counter 9.

As illustrated in the lower part of FIG. 6, it is assumed that the UE 200 moves in the order of the SN1, the SN2, the SN3, the SN2, the SN3, the SN2, and the SN1. In this case, the UE 200 updates an sk counter for a candidate cell every time of cell moving, and generates a security key for the candidate cell, based on the updated sk counter. When two or more security keys (sk counters) are assigned to a candidate cell, the UE 200 may update an sk counter, based on a predetermined rule. The predetermined rule may be one that uses sk counter values in ascending order, or one that uses sk counter values in descending order.

When the case is assumed, the following issues are considered.

First, since the gNB 200 (candidate cell) does not know an sk counter value to be used by the UE 200 in generating a security key, there is a possibility that recognition of the sk counter value differs between the UE 200 and the gNB 100.

Second, since the number of security keys that can be allocated to the gNB 200 (candidate cell) is limited, it is assumed that the number of security keys allocated to a candidate cell may be exhausted when, for example, the UE 200 moves frequently to the candidate cell. Thus, after the number of security keys allocated to the candidate cell is exhausted, an issue of reusing a security key to be used between the UE 200 and the gNB 200 (candidate cell) arises.

Third, since the number of security keys that can be allocated to the gNB 200 (candidate cell) is limited, the appropriate number of security keys allocated to each of candidate cells is not clear. In other words, when each sk counter used to generate security keys allocated to candidate cells is configured to the UE 200, it is not clear how many sk counters should be configured to the UE 200.

Note that in the case described above, a DC is exemplified, but the same is true for Handover. In Handover, an sk counter may be read as an NCC.

In order to resolve the above issues, operations described below may be executed.

### (4) Operation examples

Operation examples will be described below. As operation examples, the following variations are considered.

### (4.1) Operation example 1

In operation example 1, a CPC to a T-SN1, a CPA of the T-SN1, a CPC to a T-SN2, and a CPA of the T-SN2 will be described in a state of being connected to a Source SN (hereinafter, S-SN).

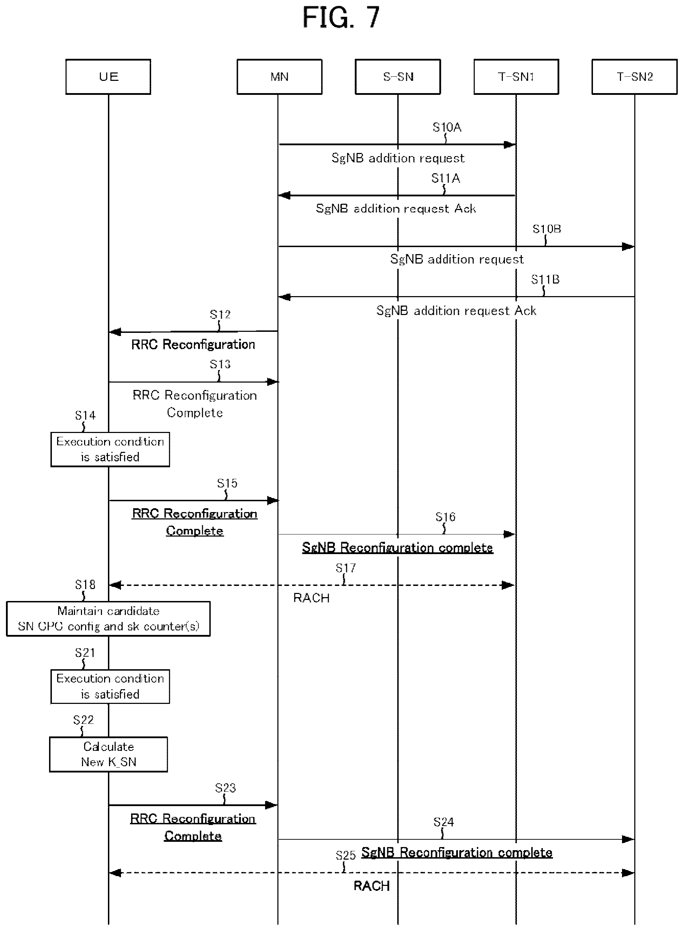

As illustrated in FIG. 7, in step S10A, an MN transmits an SgNB addition request to a T-SN1. The SgNB addition request includes one or more security keys to be allocated to the T-SN1. In step S11A, the T-SN1 transmits an SgNB addition request Ack to the MN.

In step S10B, the MN transmits an SgNB addition request to a T-SN2. The SgNB addition request includes one or more security keys to be allocated to the T-SN2. In step S11B, the T-SN2 transmits an SgNB addition request Ack to the MN.

In step S12, the MN transmits an RRC Reconfiguration to the UE 200. The RRC Reconfiguration includes configuration information (SN RRCReconfig) of candidate cells (S-SN, T-SN1, T-SN2). SN RRCReconfig may be read as CPC config. Furthermore, the RRC Reconfiguration includes one or more sk counters to be used to generate one or more security keys allocated to the T-SN1, and one or more sk counters to be used to generate one or more security keys allocated to the T-SN2.

In step S13, the UE 200 transmits an RRC Reconfiguration Complete to the MN.

In step S14, the UE 200 detects that a condition for executing a connection to the T-SN1 is satisfied.

In step S15, the UE 200 transmits an RRC Reconfiguration Complete to the MN. The RRC Reconfiguration Complete includes key-related information. The RRC Reconfiguration Complete may include an sk counter to be used to generate a security key for the T-SN1. The RRC Reconfiguration Complete may include information indicating exhaustion of security keys (sk counter) allocated to the T-SN1.

In step S16, the MN transmits an SgNB Reconfiguration Complete to the T-SN1. The SgNB Reconfiguration Complete may include the key-related information received in step S15.

In step S17, the UE 200 transmits an RACH to the T-SN1. In other words, the UE 200 executes a random access procedure for the T-SN1.

In step S18, the UE 200 maintains configuration information (CPC config) of candidate cells (S-SN, T-SN1, T-SN2) without deleting them. The UE 200 maintains an sk counter of the candidate cells (S-SN, T-SN1, T-SN2) without deleting them.

In step S21, the UE 200 detects that a condition for executing a connection to the T-SN2 is satisfied.

In step S22, the UE 200 generates a security key (New K_SN) for the T-SN2. Specifically, the UE 200 generates a security key for the T-SN2, based on the sk counter and K_{gNB} corresponding to the T-SN2.

In step S23, the UE 200 transmits an RRC Reconfiguration Complete message to the MN. The RRC Reconfiguration Complete message includes key-related information. The RRC Reconfiguration Complete message may include the sk counter to be used to generate the security key for the T-SN2. The RRC Reconfiguration Complete message may include information indicating exhaustion of security keys (sk counter) allocated to the T-SN2. The information indicating exhaustion of security keys (sk counter) allocated to the T-SN2 may indicate that there is no security key (sk counter) available for the T-SN2, or that a security key (sk counter) available for the T-SN2 is the last one.

In step S24, the MN transmits an SgNB Reconfiguration Complete to the T-SN2. The SgNB Reconfiguration Complete may include the key-related information received in step S23.

In step S25, the UE 200 transmits an RACH to the T-SN2. In other words, the UE 200 executes a random access procedure for the T-SN2. The security key (New K_SN) generated in step S22 is used in a communication between the UE 200 and the T-SN2.

In operation example 1, key-related information (sk counter used to generate a security key for the T-SN) is transmitted to the T-SN. In this configuration, the UE 200 and the gNB 100 (candidate cell) can have a common recognition of an sk counter to be used to generate a security key.

### (4.2) Operation example 2

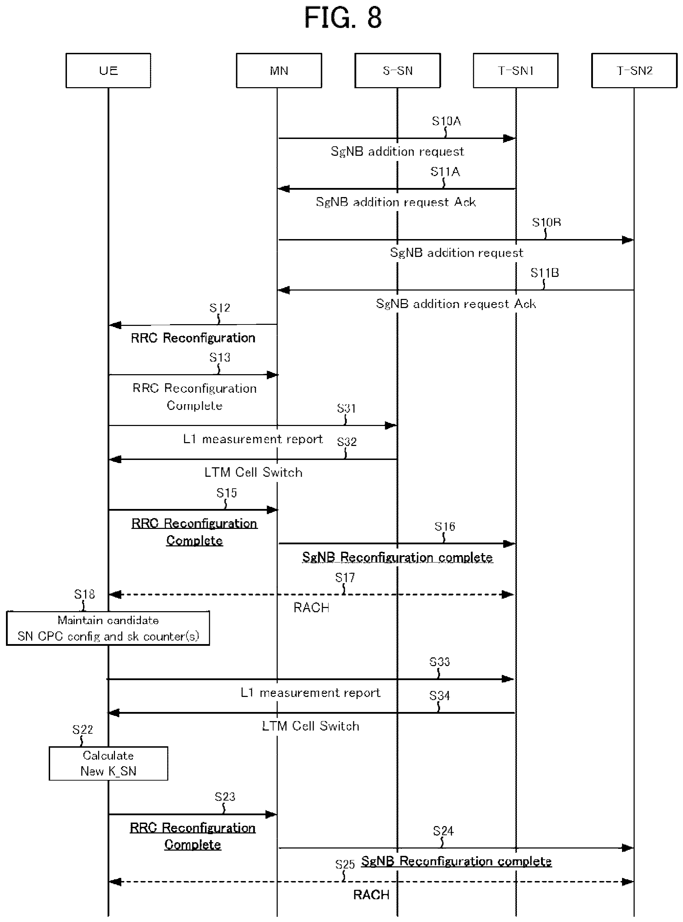

In operation example 2, a case where operation example 1 is adapted to LTM will be described. FIG. 8 is the same as FIG. 7 except that steps S31 and S32 are executed instead of step S14 illustrated in FIG. 7, and steps S33 and S34 are executed instead of step S21 illustrated in FIG. 7. Hereinafter, description of steps similar to those in FIG. 7 will be omitted.

As illustrated in FIG. 8, in step S31, the UE 200 transmits an L1 Measurement report to an S-SN. In step S32, the S-SN transmits an LTM cell switch command to the UE 200. In this example, the LTM cell switch command is a command for instructing movement from the S-SN to the T-SN1.

In step S33, the UE 200 transmits an L1 Measurement report to the T-SN1. In step S34, the T-SN1 transmits an LTM cell switch command to the UE 200. Here, a case where the LTM cell switch command is a command for instructing movement from the T-SN1 to the T-SN2 is exemplified.

In operation example 2, as in operation example 1, key-related information (sk counter used to generate a security key for T-SN) is transmitted to the T-SN. In this configuration, the UE 200 and the gNB 100 (candidate cell) can have common recognition regarding an sk counter to be used to generate a security key.

### (4.3) Operation example 3

In operation example 3, a case where an MN acquires information indicating exhaustion of security keys (sk counter) allocated to a candidate cell in operation example 1 or operation example 2 will be described.

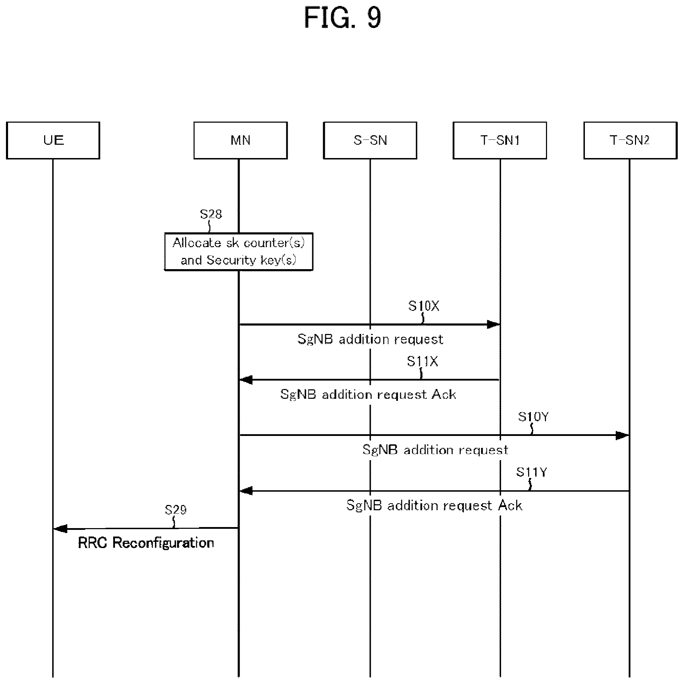

As illustrated in FIG. 9, in step S28, the MN reallocates an sk counter(s) and a security key(s) to each candidate cell, in accordance with key-related information including information indicating exhaustion of security keys (sk counter) allocated to the candidate cell. The MN may acquire key-related information from the UE 200.

In step S10X, the MN transmits an SgNB addition request to the T-SN1. The SgNB addition request includes one or more security keys reallocated to the T-SN1. In step S11X, the T-SN1 transmits an SgNB addition request Ack to the MN.

In step S10Y, the MN transmits an SgNB addition request to the T-SN2. The SgNB addition request includes one or more security keys reallocated to the T-SN2. In step S11Y, the T-SN2 transmits an SgNB addition request Ack to the MN.

In step 29, the MN transmits an RRC Reconfiguration to the UE 200. The RRC Reconfiguration includes one or more sk counters to be used to generate one or more security keys reallocated to the T-SN1, and one or more sk counters to be used to generate one or more security keys reallocated to the T-SN2. Since configuration information (SN RRCRonfig) of the candidate cells (S-SN, T-SN1, T-SN2) has already been transmitted, the RRC Reconfiguration need not include the configuration information (SN RRCRonfig) of the candidate cells (S-SN, T-SN1, T-SN2). However, the RRC Reconfiguration may include the configuration information (SN RRCRonfig) of the candidate cells (S-SN, T-SN1, T-SN2).

In operation example 3, a security key (sk counter) allocated to a candidate cell may be updated each time a UE moves to the candidate cell. The UE 200 may have a counter for counting used security keys (sk counter) for each candidate cell.

In operation example 3, it is assumed that information indicating exhaustion of security keys (sk counter) allocated to a candidate cell is transmitted from the UE 200. However, operation example 3 is not limited to this. For example, the MN may have a counter for counting used security keys (sk counter) for each candidate cell. The SN may have a counter for counting used security keys (sk counter). In this case, the SN may transmit information indicating exhaustion of security keys (sk counter) to the MN when exhaustion of security keys (sk counter) is detected by using a counter for counting used security keys (sk counter).

In operation example 3, security keys (sk counter) are reallocated for each candidate cell according to information indicating exhaustion of security keys (sk counter) allocated to each candidate cell. In this configuration, the issue of reusing security keys can be resolved. That is, security between the UE 200 and the gNB 100 can be appropriately maintained.

### (4.4) Operation example 4

In operation example 4, a CHO to the T-gNB1, and a CHO to the T-gNB2 in a state of being connected to the Source gNB (hereinafter S-gNB) will be described.

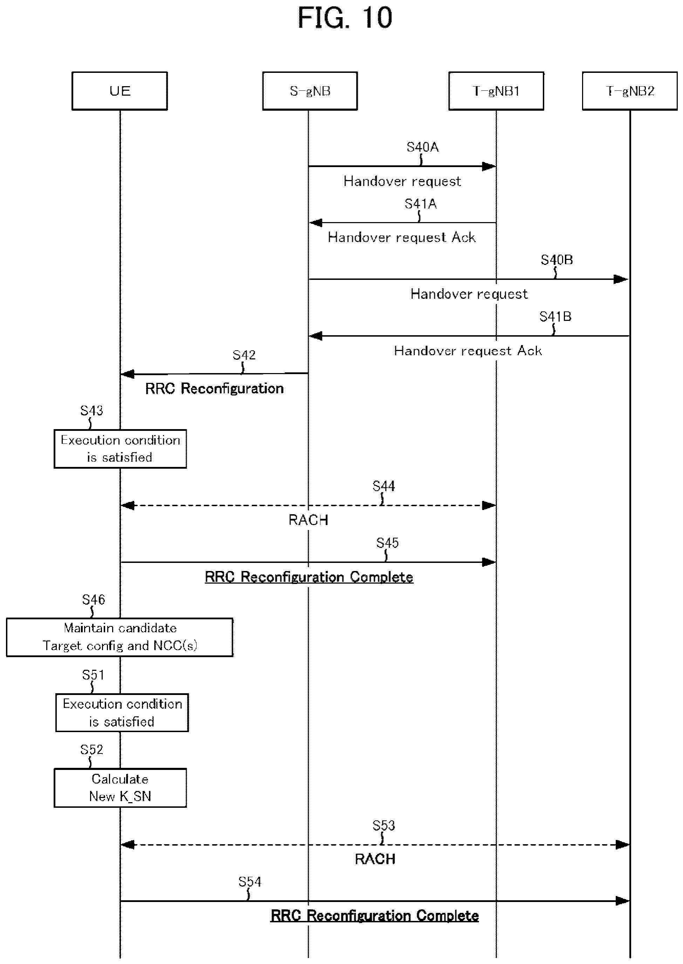

As illustrated in FIG. 10, in step S40A, the S-gNB transmits a Handover request to the T-gNB1. The Handover request includes one or more security keys to be allocated to the T-gNB1. In step S41A, the T-gNB1 transmits a Handover request Ack to the S-gNB.

In step S40B, the S-gNB transmits a Handover request to the T-gNB2. The Handover request includes one or more security keys to be allocated to the T-gNB2. In step S41B, the T-gNB2 transmits a Handover request Ack to the S-gNB.

In step S42, the S-gNB transmits an RRC Reconfiguration to the UE 200. The RRC Reconfiguration includes configuration information (gNB RRCRonfig) of candidate cells (S-gNB, T-gNB1, T-gNB2). The gNB RRCRonfig may be read as Target config. In addition, the RRC Reconfiguration includes one or more NCCs to be used to generate one or more security keys allocated to the T-gNB1, and one or more NCCs to be used to generate one or more security keys allocated to the T-gNB2.

In step S43, the UE 200 detects that a condition for executing a connection to the T-gNB1 is satisfied.

In step S44, the UE 200 transmits an RACH to the T-gNB1. In other words, the UE 200 executes a random access procedure for the T-gNB1.

In step S45, the UE 200 transmits an RRC Reconfiguration Complete to the T-gNB1. The RRC Reconfiguration Complete includes key-related information. The RRC Reconfiguration Complete may include an NCC to be used to generate a security key for the T-gNB1. The RRC Reconfiguration Complete may include information indicating exhaustion of security keys (NCC) to be allocated to the T-gNB1.

In step S46, the UE 200 maintains the configuration information (Target config) of the candidate cells (S-gNB, T-gNB1, T-gNB2) without deleting them. The UE 200 maintains the NCC of the candidate cells (S-gNB, T-gNB1, T-gNB2) without deleting them.

In step S51, the UE 200 detects that a condition for executing a connection to the T-gNB2 is satisfied.

In step S52, the UE 200 generates a security key (New K_gNB) for the T-gNB2. Specifically, the UE 200 generates a security key for the T-gNB2, based on the NCC and K_{gNB} corresponding to the T-gNB2.

In step S53, the UE 200 transmits an RACH to the T-gNB2. In other words, the UE 200 executes a random access procedure for the T-gNB2. In communication between the UE 200 and the T-gNB2, the security key (New K_gNB) generated in step S52 is used.

In step S54, the UE 200 transmits an RRC Reconfiguration Complete to the T-gNB2. The RRC Reconfiguration Complete includes key-related information. The RRC Reconfiguration Complete may include an NCC to be used to generate a security key for the T-gNB2. The RRC Reconfiguration Complete may include information indicating exhaustion of security keys (NCC) to be allocated to the T-gNB2. The information indicating exhaustion of security keys (NCC) to be allocated to the T-gNB2 may indicate that there is no security key (NCC) usable by the T-gNB2, or that the security key (NCC) usable by the T-gNB2 is the last one.

In operation example 4, key-related information (NCC used to generate a security key for the T-gNB) is transmitted to the T-gNB. In this configuration, the UE 200 and the gNB 100 (candidate cell) can have common recognition of an NCC to be used to generate a security key.

### (4.5) Operation example 5

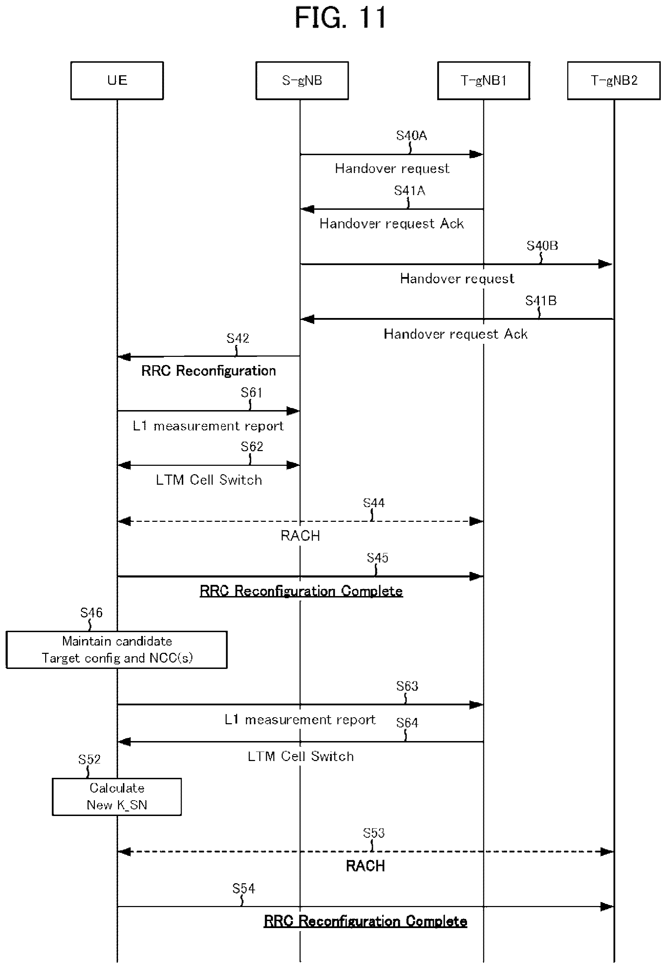

In operation example 5, a case where operation example 4 is adapted to LTM will be described. FIG. 11 is the same as FIG. 10 except that steps S61 and S62 are executed instead of step S43 illustrated in FIG. 10, and steps S63 and S64 are executed instead of step S51 illustrated in FIG. 10. Hereinafter, description of steps similar to those in FIG. 10 will be omitted.

As illustrated in FIG. 11, in step S61, the UE 200 transmits an L1 Measurement report to an S-gNB. With the L1 Measurement report, in step S62, the S-gNB transmits an LTM cell switch command to the UE 200. Here, a case where the LTM cell switch command is a command for instructing movement from the S-gNB to a T-gNB1 is exemplified.

In step S63, the UE 200 transmits an L1 Measurement report to the T-gNB1. With the L1 Measurement report, in step S64, the T-gNB1 transmits an LTM cell switch command to the UE 200. Here, a case where the LTM cell switch command is a command for instructing movement from the T-gNB1 to a T-gNB2 is exemplified.

In operation example 5, as in operation example 4, key-related information (NCC used to generate a security key for the T-gNB) is transmitted to the T-gNB. With this configuration, the UE 200 and the gNB 100 (candidate cell) can have a common recognition of an NCC to be used to generate a security key.

### (4.6) Operation example 6

In operation example 6, a case where an S-gNB acquires information indicating exhaustion of security keys (NCCs) to be allocated to a candidate cell in operation example 4 or operation example 5 will be described.

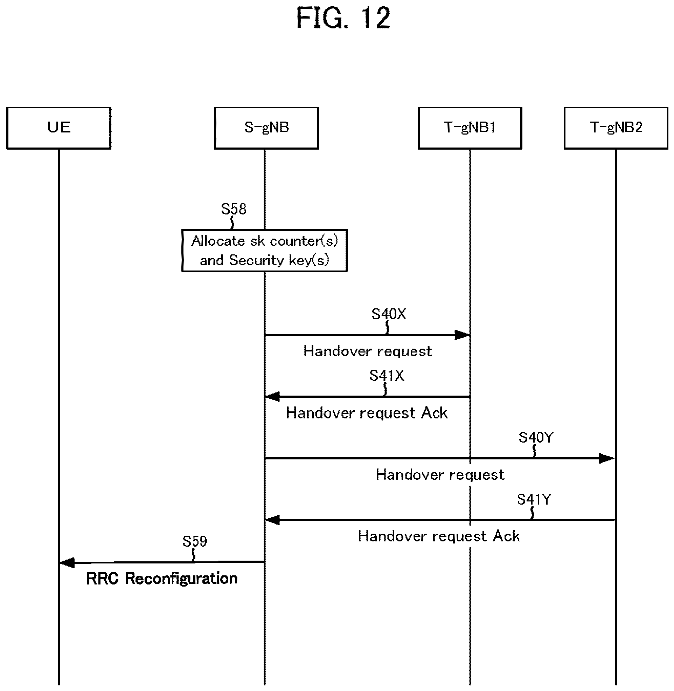

As illustrated in FIG. 12, in step S58, the S-gNB reallocates an NCC(s) and a security key(s) for each candidate cell according to key-related information including information indicating exhaustion of security keys (NCCs) to be allocated to each candidate cell. The S-gNB may acquire the key-related information from a T-gNB which receives the key-related information.

In step S40X, the S-gNB transmits a Handover request to a T-gNB1. The Handover request includes one or more security keys reallocated to the T-gNB1. In step S41X, the T-gNB1 transmits a Handover request Ack to the S-gNB.

In step S40Y, the S-gNB transmits a Handover request to a T-gNB2. The Handover request includes one or more security keys reallocated to the T-gNB2. In step S41Y, the T-gNB2 transmits a Handover request Ack to the S-gNB.

In step S59, the S-gNB transmits an RRC Reconfiguration to the UE 200. The RRC Reconfiguration includes one or more NCCs to be used to generate one or more security keys reallocated to the T-gNB1, and one or more NCCs to be used to generate one or more security keys reallocated to the T-gNB2. Since the configuration information (gNB RRCRonfig) of the candidate cells (S-gNB, T-gNB1, T-gNB2) has already been transmitted, the RRC Reconfiguration need not include the configuration information (gNB RRCRonfig) of the candidate cells (S-gNB, T-gNB1, T-gNB2). However, the RRC Reconfiguration may include the configuration information (gNB RRCRonfig) of the candidate cell (S-gNB, T-gNB1, T-gNB2).

In operation example 6, a security key (NCC) to be allocated to a candidate cell may be updated each time a UE moves to the candidate cell. The UE 200 may have a counter for counting used security keys (NCC) for each candidate cell.

In operation example 6, it is assumed that information indicating exhaustion of security keys (NCCs) to be allocated to a candidate cell is transmitted from the UE 200. However, operation example 6 is not limited to this. For example, an S-gNB may have a counter for counting used security keys (NCCs) for each candidate cell. A T-gNB may have a counter for counting used security keys (NCCs). In this case, the T-gNB may transmit information indicating exhaustion of security keys (NCCs) to the S-gNB when exhaustion of security keys (NCCs) is detected by using the counter for counting used security keys (NCCs).

In operation example 6, a security key (NCC) is reallocated to each candidate cell in accordance with information indicating exhaustion of security keys (NCCs) to be allocated to the candidate cell. In this configuration, the issue of reusing security keys can be resolved. That is, security between the UE 200 and the gNB 100 can be appropriately maintained.

### (4.7) Operation example 7

A case will be described below where the gNB 100 specifies the number of security keys to be allocated to a T-SN in a CPA or CPC. A predicted trajectory of the UE 200 is predicted using an AIML function of the gNB 100 (in this example, MN). Operation example 7 may be applied to the above-described operation examples 1 to 3.

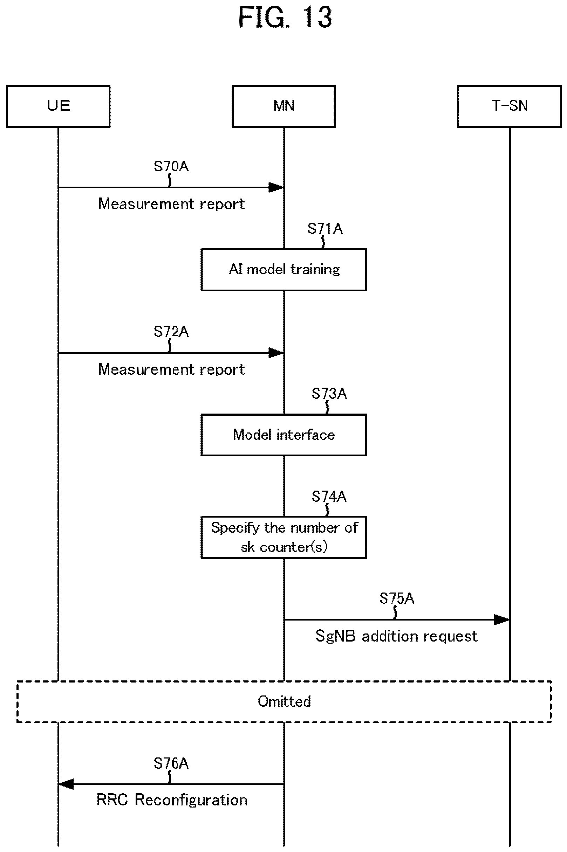

As illustrated in FIG. 13, in step S70A, the UE 200 transmits a Measurement report to the MN. The Measurement report may be an L1 Measurement report or an L3 Measurement report.

In step S71A, the MN generates an AIML model (AI model), based on the Measurement report. The AIML model is obtained by learning the correlation between the Measurement report and trajectory of a cell to which the UE 200 moves.

In step S72A, the UE 200 transmits a Measurement report to the MN. The Measurement report may be an L1 Measurement report or an L3 Measurement report.

In step S73A, the MN inputs the Measurement report into the AIML model to identify the Measurement report and information indicating a trajectory of a cell to which the UE 200 moves (Predicted UE trajectory).

In step S74A, the MN specifies the number of security key(s) (sk counter(s)) to be allocated to a candidate cell, based on the Predicted UE trajectory. The MN may predict the number of times the UE 200 accesses the candidate cell, based on the Predicted UE trajectory. The number of security key(s) (sk counter(s)) to be allocated to the candidate cell may be interchanged with the number of times the UE 200 accesses the candidate cell.

In step S75A, the MN transmits an SgNB addition request to the T-SN. The SgNB addition request includes the number of security key(s) specified in step S74A.

In step S76A, the MN transmits an RRC Reconfiguration to the UE 200. The RRC Reconfiguration includes the number of sk counter(s) specified in step S74A.

In operation example 7, the number of security key(s) (sk counter(s)) to be allocated to a candidate cell is specified based on the Predicted UE trajectory. In this configuration, exhaustion of security keys(s) (sk counter(s)) for a candidate cell can be appropriately controlled.

### (4.8) Operation example 8

Hereinafter, a case will be described where the UE 200 specifies the number of security keys to be allocated to a T-SN in a CPA or CPC. A predicted trajectory of the UE 200 is predicted using an AIML function of the UE 200. Operation example 8 may be applied to the above-described operation examples 1 to 3.

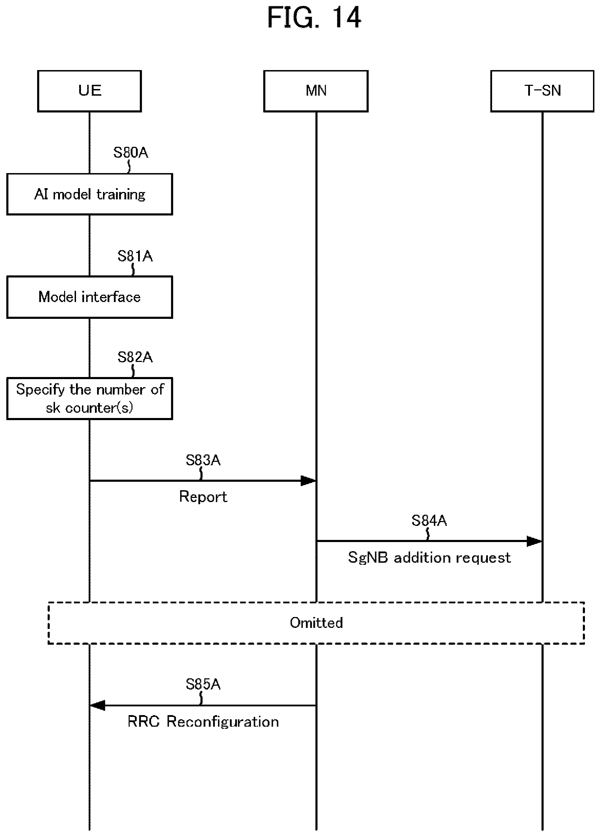

As illustrated in FIG. 14, in step S80A, the UE 200 generates an AIML model (AI model), based on the content of a Measurement report (Measurement result) to be transmitted to an MN. The AIML model is obtained by learning the correlation between the Measurement report and the trajectory of a cell to which the UE 200 moves.

In step S81A, the MN inputs the content of the Measurement report to be transmitted to the MN into the AIML model, thereby specifying the Measurement result and information indicating a predicted trajectory of a cell to which the UE 200 moves (Predicted UE trajectory).

In step S82A, the UE 200 specifies the number of security key(s) (sk counter(s)) to be allocated to the candidate cell, based on the Predicted UE trajectory.

In step S83A, the UE 200 transmits a Report to the MN. The Report may include the Predicted UE trajectory predicted in step S81A. The Report may include the number of security key(s) (sk counter(s)) identified in step S82A.

In step S84A, the MN transmits an SgNB addition request to the T-SN. The SgNB addition request includes the number of security key(s) specified by the Report received in step S83A.

In step S85A, the MN transmits an RRC Reconfiguration to the UE 200. The RRC Reconfiguration includes the number of sk counter(s) specified by the Report received in step S83A.

In operation example 8, the case where the number of security key(s) (sk counter(s)) is specified by the UE 200 is exemplified. However, operation example 8 is not limited to this. The number of security key(s) (sk counter (s)) may be specified by the MN receiving the Predicted UE trajectory.

In operation example 8, the number of security key(s) (sk counter(s)) to be allocated to a candidate cell is specified based on a Predicted UE trajectory. With this configuration, exhaustion of security key(s) (sk counter(s)) for a candidate cell can be appropriately controlled.

### (4.9) Operation example 9

A case where the gNB 100 specifies the number of security keys to be allocated to a T-gNB in LTM will be described below. A predicted trajectory of the UE 200 is made using an AIML function of the gNB 100 (here, S-gNB). Operation example 9 may be applied to operation examples 4 to 6 described above.

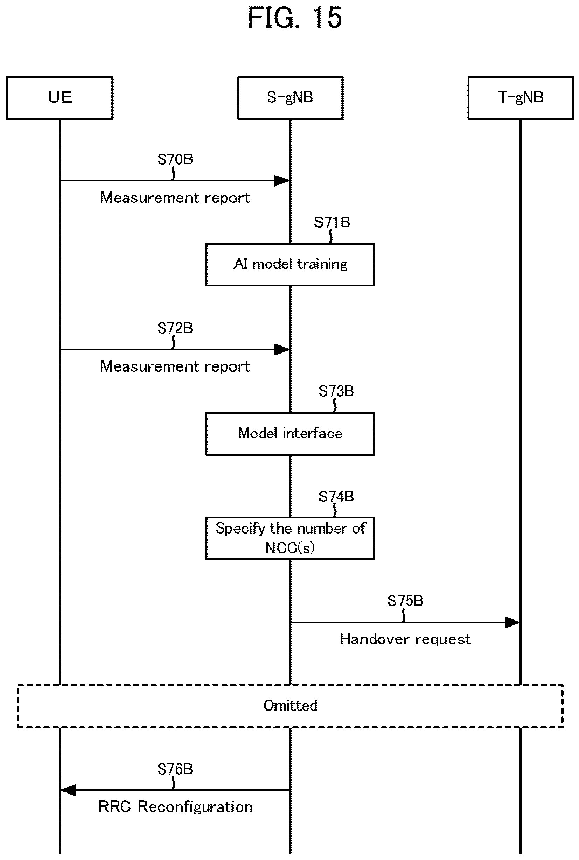

As illustrated in FIG. 15, in step S70B, the UE 200 transmits a Measurement report to an S-gNB. The Measurement report may be an L1 Measurement report or an L3 Measurement report.

In step S71B, the S-gNB generates an AIML model (AI model), based on the Measurement report. The AIML model is obtained by learning the correlation between the Measurement report and trajectory of a cell to which the UE 200 moves.

In step S72B, the UE 200 transmits a Measurement report to the S-gNB. The Measurement report may be an L1 Measurement report or an L3 Measurement report.

In step S73B, the S-gNB inputs the Measurement report into the AIML model to identify the Measurement report and information indicating a predicted trajectory of a cell to which the UE 200 moves (Predicted UE trajectory).

In step S74B, the S-gNB identifies the number of security key(s) (NCC(s)) to allocate to a candidate cell, based on the Predicted UE trajectory.

In step S75B, the S-gNB transmits an SgNB addition request to the T-gNB. The SgNB addition request includes the number of security key(s) specified in step S74B.

In step S76B, the S-gNB transmits an RRC Reconfiguration to the UE 200. The RRC Reconfiguration includes the number of NCC(s) specified in step S74B.

In operation example 9, the number of security key(s) (NCC(s)) to be allocated to a candidate cell is specified based on a Predicted UE trajectory. With this configuration, exhaustion of security key(s) (NCC(s)) for a candidate cell can be appropriately controlled.

### (4.10) Operation example 10

A case where the UE 200 specifies the number of security keys to be allocated to a T-gNB in LTM will be described below. A predicted trajectory of the UE 200 is predicted using an AIML function of the UE 200. Operation example 10 may be applied to operation examples 4 to 6 described above.

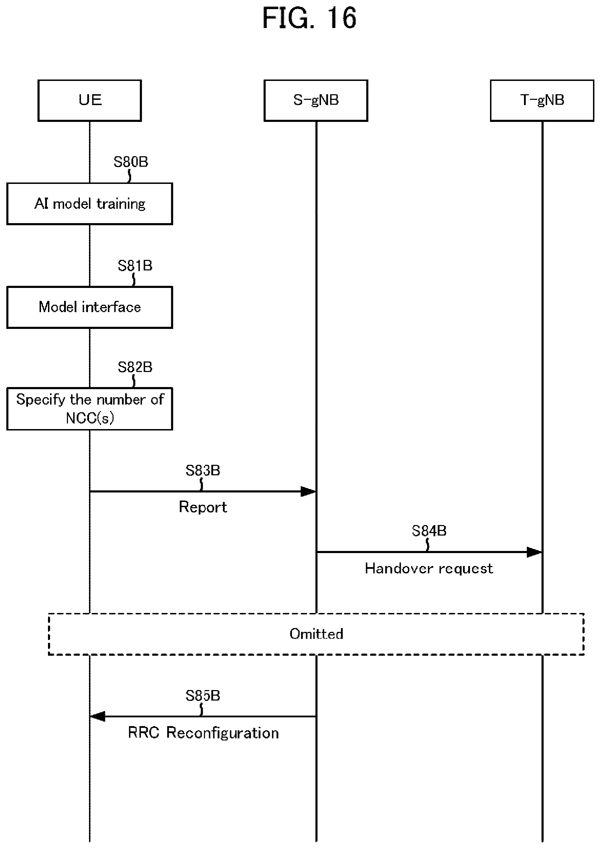

As illustrated in FIG. 16, in step S80B, the UE 200 generates an AIML model (AI model), based on the content of a Measurement report (Measurement result) to be transmitted to an S-gNB. The AIML model is obtained by learning the correlation between the Measurement report and the trajectory of a cell to which the UE 200 moves.

In step S81B, the S-gNB inputs the content of the Measurement report (Measurement result) to be transmitted to the S-gNB into the AIML model, thereby identifying the Measurement result and information indicating a predicted trajectory of a cell to which the UE 200 moves (Predicted UE trajectory) .

In step S82B, the UE 200 identifies the number of Security Key(s) (NCC(s)) to be allocated to the candidate cell, based on the Predicted UE trajectory.

In step S83B, the UE 200 transmits a Report to the S-gNB. The Report may include the Predicted UE trajectory predicted in step S81B. The Report may include the number of security key(s) (NCC(s)) identified in step S82B.

In step S84B, the S-gNB transmits an SgNB addition request to the T-gNB. The SgNB addition request includes the number of Security Key(s) identified by the Report received in step S83B.

In step S85B, the S-gNB transmits an RRC Reconfiguration to the UE 200. The RRC Reconfiguration includes the number of NCC(s) identified by the Report received in step S83B.

In operation example 10, the case where the number of security keys(s) (NCC(s)) is specified by the UE 200 is exemplified. However, operation example 8 is not limited to this. The number of security keys(s) (NCC(s)) may be specified by the S-gNB receiving the Predicted UE trajectory.

In operation example 10, the number of security keys(s) (NCC(s)) to be allocated to a candidate cell is specified based on the Predicted UE trajectory. With this configuration, exhaustion of security keys(s) (NCC(s)) for a candidate cell can be appropriately controlled.

### (4.11) Operation example 11

In operation example 11, other operation examples will be described. As other operation examples, the following operation examples are considered.

In operation example 11-1, in the above-described operation examples 1 to 3, the MN may store the correspondence relationship between sk counters and security keys. Similarly, the SN may store the correspondence relationship between sk counters and security keys.

In operation example 11-2, in the above-described operation examples 1 to 3, the UE 200 and the gNB 100 (MN or SN) may assume that the UE 200 generates a security key using an sk counter determined based on a predetermined rule. The predetermined rule may be one that uses sk counter values in ascending order, or one that uses sk counter values in descending order.

In operation example 11-3, in the above-described operation examples 1 to 3, the UE 200 and the gNB 100 (MN or SN) may assume that the UE 200 generates a security key using an sk counter determined based on a rule notified from the gNB 100.

In operation example 11-4, in the above-described operation examples 4 to 6, the S-gNB may store the correspondence relationship between NCCs and security keys. Similarly, the T-gNB may store the correspondence relationship between NCCs and security keys.

In operation example 11-5, in the above-described operation examples 4 to 6, the UE 200 and the gNB 100 (S-gNB or T-gNB) may assume that the UE 200 generates a security key using an NCC determined based on a predetermined rule. The predetermined rule may be one that uses NCC values in ascending order, or one that uses NCC values in descending order.

In operation example 11-6, in the above-described operation examples 4 to 6, the UE 200 and the gNB 100 (S-gNB or T-gNB) may assume that the UE 200 generates a security key using an NCC determined based on a rule notified from the gNB 100.

### (5) Operation and effect

In the embodiment, the UE 200 transmits a key generation parameter (for example, sk counter or NCC) to be used to generate a security key for a T-SN (for example, operation examples 1, 2, 4, and 5). In this configuration, the UE 200 and the gNB 100 (candidate cell) can have common recognition regarding a key generation parameter used to generate a security key.

In the embodiment, the UE 200 transmits information indicating exhaustion of security keys (sk counter/NCC) allocated to a candidate cell (for example, operation examples 3 and 6). In this configuration, since the gNB 100 can reallocate security keys (sk counter), the issue of reusing security keys can be resolved, and security between the UE 200 and the gNB 100 can be appropriately maintained.

In the embodiment, the number of security keys(s) (sk counter(s) / NCC(s)) allocated to a candidate cell is specified based on a Predicted UE trajectory. In this configuration, exhaustion of security keys(s) (NCC(s)) for candidate cells can be appropriately controlled.

### (6) Other embodiments

Although the contents of the present invention have been described in accordance with embodiments, the present invention is not limited to these descriptions, and it is obvious to those skilled in the art that various modifications and improvements are possible.

The above disclosure exemplifies the case where key-related information is included in an RRC Reconfiguration Complete. However, the above disclosure is not limited to this. Key-related information may be included in an RRC message other than the RRC Reconfiguration Complete.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIGS. 4 and 5) used in the description of the above-described embodiment illustrates blocks in units of functions. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

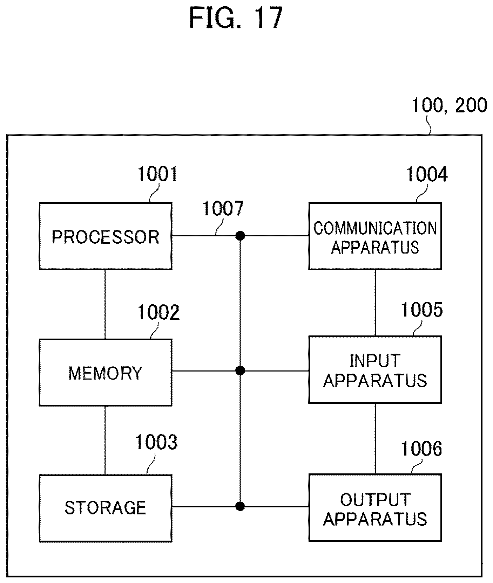

Further, the above-described gNB 100 and UE 200 (the devices) may function as a computer that performs processing of a radio communication method of the present disclosure. FIG. 17 is a diagram illustrating an example of a hardware configuration of the device. As illustrated in FIG. 17, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIGS. 4 and 5) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 controls the whole computer by, for example, running an operating system. The processor 1001 may be configured with a0 central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the device may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), W-CDMA(registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station 10. However, a combination of multiple other network nodes may be considered (e.g., MME and S-GW).

Information or signals (information and the like) may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any of a one of various different technologies. For example, data, an instruction, a command, information, a signal, a bit, a symbol, a chip, or the like, described throughout the present application, may be represented by a voltage, an electric current, electromagnetic waves, magnetic fields, magnetic particle, optical fields, a photon, or a combination thereof.

It should be noted that a term used in the present specification and/or term required for understanding of the present specification may be replaced by a term having the same or similar meaning. For example, a channel and a symbol may be a signal (signaling). Further a signal may also be a message. Further, the component carrier (CC) may be referred to as a carrier frequency, cell, frequency carrier, or the like.

As used in the present disclosure, the terms "system" and "network" are used interchangeably.

Furthermore, the information, parameters, and the like, described in the present disclosure may be expressed using absolute values, relative values from a predetermined values, or they may be expressed using corresponding different information. For example, a radio resource may be what is indicated by an index.

The names used for the parameters described above are not used as limitation. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells (also called sectors). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a mobile station (hereinafter, a user terminal). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, mobile stations may have the functions of the base stations described above. The words such as "uplink" and "downlink" may be interpreted as the words corresponding to the terminal-to-terminal communication (for example, "side"). For example, an uplink channel, a downlink channel and so on may be interpreted as a sidelink channel (or sidelink).

Likewise, the mobile station in the present disclosure may be interpreted as base station. In this case, the base station may have the functions of the mobile station described above.

A radio frame may be constituted of one or a plurality of periods (frames) in the time domain. Each of one or a plurality of periods (frames) constituting a radio frame may be referred to as a "subframe."

Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "subcarrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

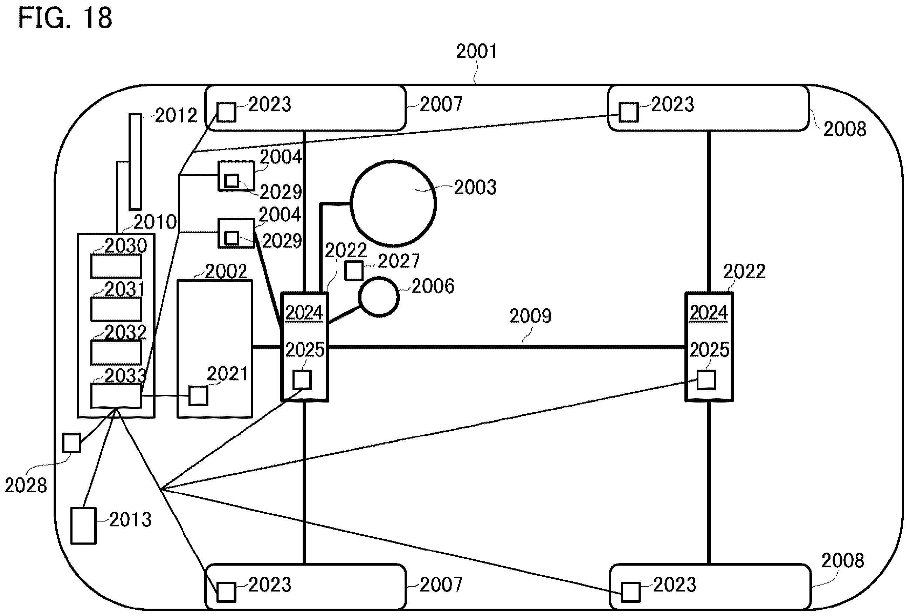

FIG. 18 shows a configuration example of a vehicle 2001. As shown in FIG. 18, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2027 provided in the vehicle. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits the current signal input from the current sensor to the electronic control unit 2010 to an external device via radio communication. In addition, the communication module 2013 also transmits to an external device via radio communication the following signals input to the electronic control unit 2010: a front or rear wheel rotation speed signal acquired by a revolution sensor 2022, a front and rear wheel pneumatic signal acquired by a pneumatic sensor 2023, a vehicle speed signal acquired by a vehicle speed sensor 2024, an acceleration signal acquired by an acceleration sensor 2025, an stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal acquired by an object detection sensor 2028 for detecting an obstacles, a vehicles, a pedestrian, and the like.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### (Note)

The above disclosure may be expressed as follows.

A first feature is a terminal including a communication unit that communicates with a base station forming candidate cells to which the terminal may move, and a control unit that generates, based on a key generation parameter for each of the candidate cells, security keys for the candidate cells, wherein the communication unit transmits key-related information related to the key generation parameter.

A second feature is the terminal in the first feature, wherein the key-related information includes the key generation parameter, which has been used to generate the security keys.

A third feature is the terminal in the first feature or the second feature, wherein the key-related information includes information indicating exhaustion of key generation parameters allocated to the candidate cells.

A fourth feature is a base station including a communication unit that communicates with a terminal; and a control unit that assumes that the terminal generates security keys for candidate cells, based on a key generation parameter for each of the candidate cells to which the terminal may move, wherein the communication unit receives key-related information related to the key generation parameter.

A fifth feature is a radio communication system including a terminal, and a base station, wherein the terminal includes a communication unit that communicates with a base station forming candidate cells to which the terminal may move, and a control unit that generates security keys for the candidate cells, based on a key generation parameter for each of the candidate cells, wherein the communication unit transmits key-related information related to the key generation parameter.

A sixth feature is a radio communication method including a step A of communicating with a base station forming candidate cells to which a terminal may move, a step B of generating security keys for the candidate cells, based on a key generation parameter for each of the candidate cells, and a step C of transmitting key-related information related to the key generation parameter.

### Reference Signs List

- 10: Radio communication system
- 20: NG-RAN
- 100: gNB
- 110: Reception unit
- 120: Transmission unit
- 130: Control unit
- 200: UE
- 210: Radio signal transmission and reception unit
- 220: Amplifier unit
- 230: Modulation and demodulation unit
- 240: Control signal and reference signal processing unit
- 250: Encoding/decoding unit
- 260: Data transmission and reception unit
- 270: Control unit
- 1001: Processor
- 1002: Memory
- 1003: Storage
- 1004: Communication device
- 1005: Input device
- 1006: Output device
- 1007: Bus
- 2001: Vehicle
- 2002: Drive unit
- 2003: Steering unit
- 2004: Accelerator pedal
- 2005: Brake pedal
- 2006: Shift lever
- 2007: Left and right front wheels
- 2008: Left and right rear wheels
- 2009: Axle
- 2010: Electronic control unit
- 2012: Information service unit
- 2013: Communication module
- 2021: Current sensor
- 2022: Revolution sensor
- 2023: Pneumatic sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port

## Claims

1. A terminal comprising:
a communication unit that communicates with a base station forming candidate cells to which the terminal may move; and
a control unit that generates, based on a key generation parameter for each of the candidate cells, security keys for the candidate cells, wherein
the communication unit transmits key-related information related to the key generation parameter.

2. The terminal according to claim **1,** wherein the key-related information includes the key generation parameter, which has been used to generate the security keys.

3. The terminal according to claim 1, wherein the key-related information includes information indicating exhaustion of key generation parameters allocated to the candidate cells.

4. A base station comprising:
a communication unit that communicates with a terminal; and
a control unit that assumes that the terminal generates security keys for candidate cells, based on a key generation parameter for each of the candidate cells to which the terminal may move, wherein
the communication unit receives key-related information related to the key generation parameter.

5. A radio communication system comprising:
a terminal; and
a base station, wherein
the terminal includes
a communication unit that communicates with a base station forming candidate cells to which the terminal moves, and
a control unit that generates security keys for the candidate cells, based on a key generation parameter for each of the candidate cells, wherein
the communication unit transmits key-related information related to the key generation parameter.

6. A radio communication method comprising:
a step A of communicating with a base station forming a candidate cells to which a terminal may move;
a step B of generating security keys for the candidate cells, based on a key generation parameter for each of the candidate cells; and
a step C of transmitting key-related information related to the key generation parameter.
